# EUROPEAN PATENT SPECIFICATION

(11) **EP 1 961 801 B1**
(45) Date of publication and mention of the grant of the patent: **04.06.2014**
(21) Application number: 06833973.8
(22) Date of filing: 05.12.2006
(51) Int. Cl.: C10M 169/02, C10M 105/38, F16C 33/66

(54) **USE OF A GREASE COMPOSITION**
VERWENDUNG EINER SCHMIERFETTZUSAMMENSETZUNG
UTILISATION D'UNE GRAISSE

(30) Priority: 05.12.2005 JP 2005350804
(43) Date of publication of application: 27.08.2008
(73) Proprietor: Kyodo Yushi Co., Ltd., Kanagawa 251-8588 (JP)
(72) Inventor: IMAI, Yutaka c/o KYODO YUSHI CO., LTD.,, Fujisawa-shi, Kanagawa 2518588 (JP); OONUKI, Yuji c/o KYODO YUSHI CO., LTD.,, Fujisawa-shi, Kanagawa 2518588 (JP); SHIBAYAMA, Atsushi c/o KYODO YUSHI CO., LTD.,, Fujisawa-shi, Kanagawa 2518588 (JP)
(74) Representative: Bates, Philip Ian
(86) International application number: PCT/JP2006/324218
(87) International publication number: WO 2007/066636

(56) References cited:
- EP-A- 1 199 300
- EP-A- 1 327 625
- JP-A- 07 224 289
- JP-A- 08 020 789
- JP-A- 09 241 671
- JP-A- 2002 193 882
- JP-A- 2005 232 470
- RU-C1- 2 233 313

## Description

### Technical Field

The present invention relates to the use of a grease composition containing an ester oil-containing base oil and a thickening agent. More particularly, the present invention relates to the use of a grease composition whose low temperature torque characteristics and lubricating life are improved and which is, therefore, favorably used in a rolling bearing.

### Background Art

To improve the low temperature torque characteristics and the lubricating life of a grease composition, a base oil used therein should satisfy requirements for characteristic properties such as a high viscosity index, low-temperature flow properties, stability to thermal oxidation and low volatility. For this reason, there have conventionally been reported a variety of proposals which relate to the various improvement of the characteristic properties of such a grease composition and base oils used therein.

In general, base oils used in grease compositions can roughly been divided into mineral oils and synthetic oils. In this respect, the mineral oils have widely been used conventionally. However, the mineral oil has such a merit that it is inexpensive on the one hand, but it has such a demerit that it is quite insufficient in lubricating properties when used at a low temperature.

On the other hand, as a base oil for use in a grease composition, which can eliminate the foregoing drawbacks, there have recently been developed various kinds of synthetic oils. In particular, there has been proposed a synthetic base oil for lubricants comprising esters synthesized by pentaerythritol and an acid component obtained by admixing caprylic acid and/or capric acid and 2-ethyl hexanoic acid in a mixing ratio [(caprylic acid and/or capric acid)/(2-ethyl hexanoic acid)] of 80/20 to 50/50 (by weight) (see, for instance, Patent Document 1 given below), as such a base oil which is improved in the lubricating properties when used at a low temperature.

In addition, a base oil for use in a grease composition has likewise been proposed, which comprises an ester of pentaerythritol with a fatty acid which contains (A) n-heptanoic acid and (B) at least one branched fatty acid selected from the group consisting of 2-ethyl hexanoic acid and i-nonanoic acid (see, for instance, Patent Document 2 given below). However, it has been found that the grease products prepared using these base oils are insufficient in their low temperature flow properties upon the use thereof at a low temperature. At present, there has not yet been developed or proposed any such base oil which can satisfactorily be accepted by users.
Patent Document 1: JP-A-07-224289;
Patent Document 2: JP-A-11-80766.

JP 2005 232470 discloses a grease base oil for bearings.

### Disclosure of the Invention

### Problems That the Invention is to Solve

Accordingly, it is an object of the present invention to provide a grease composition which can favorably be used in rolling bearings under low temperature conditions and which can ensure its stable lubricating properties over a long period of time. More particularly, the present invention herein provides a grease composition which is excellent in low temperature torque characteristics and lubricating life as well as a bearing in which the composition is filled.

### Means for the Solution of the Problems

The inventors of this invention have conducted various studies to solve the foregoing problems associated with the conventional techniques and as a result, the inventors have found that the use of a specific ester oil in a base oil employed in the preparation of a lubricant would permit the preparation of a grease composition which is improved in low temperature torque characteristics and lubricating life and which can favorably be used in a rolling bearing under low temperature conditions and which can ensure its stable lubricating properties over a long period of time.

The present invention thus provides the use of a grease composition and a bearing as will be detailed below:
1. Use of a grease composition in a bearing wherein:
   said grease composition comprises a base oil and a thickening agent,
   the base oil comprises a pentaerythritol tetra-ester oil alone or a mixture of the pentaerythritol tetra-ester oil and a synthetic oil other than the tetra-ester oil and/or a mineral oil,
   wherein the pentaerythritol tetra-ester oil consists of an ester composed of pentaerythritol and fatty acids, the fatty acids consisting of 38 to 41% by mass of caprylic acid; 6 to 8% by mass of capric acid; and 52 to 54% by mass of 2-ethyl hexanoic acid,
   the composition comprises the base oil in an amount of not less than 50% by mass and the thickening agent in an amount ranging from 5 to 30% by mass on the basis of the total mass of the grease composition;
   the base oil comprises the pentaerythritol tetra-ester oil in an amount of not less than 70% by mass on the basis of the total mass of the base oil; and
   the thickening agent is lithium soap or diurea.
2. The use as set forth in item 1, wherein the pentaerythritol tetra-ester oil has a kinetic viscosity of not more than 40 mm²/s as determined at 40°C; a viscosity index of not less than 100; and a pour point of not higher than -45°C.
3. The use as set forth in item 1 or 2, wherein the composition comprises the base oil in an amount ranging from 60 to 90% by mass and the thickening agent in an amount ranging from 6 to 16% by mass on the basis of the total mass of the grease composition.
4. The use as set forth in any one of items 1 to 3, wherein the consistency of the grease composition ranges from 200 to 350.
5. The use as set forth in any one of items 1 to 4, wherein the bearing is a rolling bearing.

### Effects of the Invention

The grease composition is quite useful according to the present invention since it shows improved low-temperature torque characteristics and improved lubricating life, it is quite favorably used in a rolling bearing operated at a low temperature and it can ensure stable lubricating properties over a long period of time.

Conventionally, regarding the grease composition which makes use of an ester type synthetic oil and the bearing comprising the grease composition filled therein, there has never been proposed and/or developed, by specifying the kind and composition of the fatty acid used, any improved ester oil which has a high viscosity index, excellent low temperature flow properties, high stability to thermal oxidation and low volatility, as well as any grease composition comprising the ester oil as the base oil, which is considerably improved in the low temperature torque characteristics and the lubricating life. Therefore, the present invention would be believed to be a quite useful invention.

The present invention has been completed on the basis of such a finding that the viscosity index and the low temperature flow properties of the base oil can significantly be improved without impairing the stability thereof to the thermal oxidation by the use of an ester of pentaerythritol with fatty acids which are so designed that the kinds, mixing ratio of the fatty acids, the ratio of linear components to branched components thereof and the like are particularly specified.

More specifically, the ester of pentaerythritol with fatty acids has a high pour point and a low evaporation loss as the number of carbon atoms of the fatty acid components increases, while the ester has a low pour point and a high evaporation lose as the number of carbon atoms of the fatty acid components decreases. In addition, the ester may undergo crystallization if the fatty acid components simply comprise linear components because the molecules of such linear fatty acid components have good symmetrical characteristics and therefore, the resulting ester is insufficient in the low temperature flow properties. Similarly, it is not preferred to use an ester obtained using fatty acid components simply comprising branched components. This is because the ester has an impaired low temperature flow properties and a low viscosity index.

On the basis of the foregoing finding, the pentaerythritol tetra-ester oil used in the grease composition of the present invention is synthesized while limiting the kinds of the fatty acids to be used in the preparation of the ester.

In particular, regarding caprylic acid, capric acid and 2-ethyl hexanoic acid, the mixing ratio thereof is specified so as to fall within a particular range to thus improve the viscosity index and the low temperature flow properties of the resulting pentaerythritol tetra-ester oil without impairing the stability of the ester to thermal oxidation. Thus, it is considered that the use of such a specific pentaerythritol tetra-ester oil-containing base oil permits the improvement of the low temperature torque characteristics and the lubricating life of the resulting grease composition of the present invention.

### Best Modes for Carrying Out the Invention

The present invention will hereunder be described in more detail.

As has been discussed above, the use of the grease composition of the present invention is one comprising a specific pentaerythritol tetra-ester oil-containing base oil and a thickening agent. In this respect, the base oil usable herein may be pentaerythritol tetra-ester oil alone or a mixture thereof with, for instance, a mineral oil, and a variety of synthetic oils such as poly(alpha-olefin) (PAO), ester oils other than the foregoing pentaerythritol tetra-ester oil, silicone oils and ether oils.

The grease composition comprises not less than 50% by mass of a base oil, 5 to 30% by mass of a thickening agent and other optional additives, if necessary. It may have a consistency (worked penetration) falling within the range of from 200 to 350.

The fatty acid has such a composition that it consists of 38 to 41% by mass of caprylic acid, 6 to 8% by mass of capric acid and 52 to 54% by mass of 2-ethyl hexanoic acid.

The pentaerythritol used herein may in general be a commercially available highly purified product and the purity thereof is preferably not less than 90% and more preferably not less than 95%. Some of the commercially available ones also comprise dimers, trimers and higher oligomers, but these products may likewise be used in the present invention.

The pentaerythritol tetra-ester oil used in the grease composition of the present invention shows significantly improved heat stability, oxidation resistance, viscosity index and low temperature flow properties due to the use of the raw material having the foregoing fatty acid composition in the synthesis of the ester oil and the use of such a pentaerythritol tetra-ester oil as a base oil, in turn, permits the significant improvement of the low temperature torque characteristics and the lubricating life.

The base oil used in the grease composition of the present invention may be the foregoing pentaerythritol tetra-ester oil alone or a mixture of the ester oil with, for instance, a mineral oil and/or at least one kind of synthetic oil selected from the group consisting of ester type synthetic oils represented by esters and polyol esters; synthetic hydrocarbon oils represented by poly(alpha-olefin) and polybutene; ether type synthetic oils represented by alkyl diphenyl ethers and polypropylene glycol; silicone oils; and fluorinated oils.

The foregoing pentaerythritol tetra-ester type synthetic oil represented by the general formula (1) shows improved stability to thermal oxidation, viscosity index and low temperature flow properties and therefore, the grease composition prepared by the incorporation, into the same, of the base oil consisting of such a specific pentaerythritol tetra-ester oil has considerably improved low temperature torque characteristics and lubricating life.

The grease composition of the present invention comprises a base oil in an amount of not less than 50% by mass and preferably 60 to 90% by mass. In this respect, the foregoing pentaerythritol tetra-ester oil is used in the base oil, and the base oil comprises the ester oil in a rate of not less than 50% by mass, particularly preferably not less than 70% by mass, more preferably not less than 90% by mass and most preferably 100% by mass.

In the grease composition of the present invention, the foregoing pentaerythritol tetra-ester oil preferably has a kinetic viscosity as determined at 40°C, of not more than 40 mm²/s; a viscosity index of not less than 100 and a pour point of not higher than -45°C.

Preferably used herein are, for instance, ones selected from the group consisting of lithium soap, sodium soap, calcium soap, aluminum soap, and urea compounds. Particularly preferably thickening agents used herein include, for instance, lithium soap such as lithium stearate and lithium 12-hydroxy-stearate.

In addition, the urea compounds preferably used herein include, for instance, diurea type thickening agents among others such as those represented by the following general formula (2):

R²-NHCONH-R³-NHCONH-R⁴ (2)

In the general formula (2), R² and R⁴ may be the same or different and represent a monovalent hydrocarbon residue having 4 to 20 carbon atoms, for instance, an aliphatic hydrocarbon group, an alicyclic hydrocarbon group or an aromatic hydrocarbon group. The substituent R³ represents a divalent aromatic hydrocarbon group having 6 to 15 carbon atoms, for instance, one represented by the following formulas (3) to (5):

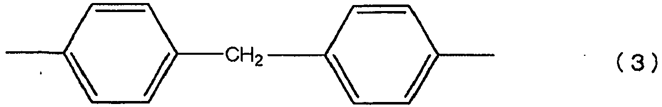

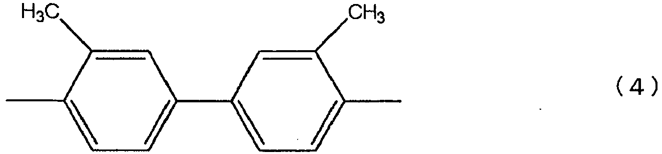

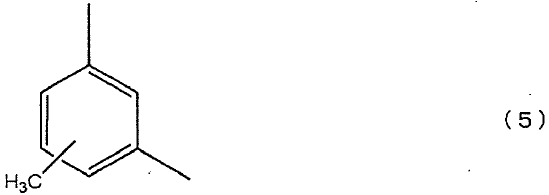

The foregoing diurea type thickening agent may be, for instance, prepared by reacting a desired diisocyanate with a desired monoamine. Specifically, the diisocyanate is diphenylmethane-4,4'-diisocyanate. The monoamines usable herein are, for instance, aliphatic amines, aromatic amines, alicyclic amines or mixtures thereof. Specific examples of aliphatic amines are octylamine, dodecylamine, hexadecylamine, octadecylamine, and oleylamine. Specific examples of aromatic amines include aniline and p-toluidine. Specific examples of alicyclic amines include cyclohexylamine. Among the foregoing monoamines, preferably used herein for preparing the foregoing diurea type thickening agents are octylamine, dodecylamine, hexadecylamine, octadecyl-amine or mixtures thereof.

The content of the thickening agent to be used in the grease composition of the present invention ranges from 5 to 30% by mass, preferably 6 to 16% by mass and more preferably 9 to 13% by mass.

The grease composition of the present invention may likewise comprise other additives, for instance, those currently used in the grease such as an antioxidant, an anticorrosive agent, a metal-inactivation agent, a detergent-dispersant, an extreme-pressure additive, an antifoaming agent, a demulsifying agent and an oiliness improver, which may be used alone or in any combination of at least two of them. In this respect, however, these additives are incorporated into the grease composition at need and the amount thereof to be used in general ranges from 0.01 to 10% by mass, but the amount thereof is not limited to any particular range insofar as the desired purposes of the present invention is not impaired by the use of the same.

The consistency (worked penetration) of the grease composition of the present invention prepared using the foregoing ingredients preferably falls within the range of from 200 to 350 and more preferably 230 to 270 and the grease composition having such a consistency (worked penetration) may most favorably be filled in a variety of bearings.

### Examples

### 1. Grease for Use in Tests

Formulations of blends prepared in Examples 1 to 6 will be specified or detailed in the following Table 1 and those prepared in Comparative Examples 1 to 13 in the following Tables 2 and 3, respectively.

### 2. Synthesis of Pentaerythritol Tetra-Ester Oil

Desired esters were prepared using pentaerythritol and fatty acids as raw materials according to the usual dehydration reaction thereof which made use of an acid catalyst such as alkylbenzene sulfonic acid.

### 3. Method for the Preparation of Grease

A base oil and a thickening agent were dispensed into a container and they were heated to a temperature of 230°C and then cooled. After cooling the mixture, desired amounts of additives were added to the mixture followed by sufficient mixing thereof, kneading thereof in a three-roll mill, the subsequent control of the consistency of the mixture to a level of 230 to 270 using a kneader and degassing of the mixture to thus give each desired grease composition.

### 4. Methods for Analyzing These Grease Compositions and Test Methods for Evaluating the Same

### Kinetic Viscosity and Viscosity Index

These physical properties of each grease composition thus prepared were evaluated according to the methods detailed in "Test Methods for Determining Kinetic Viscosity of Crude Oil and Petroleum Products and Methods for Calculating the Viscosity Indexes of Petroleum Products" as specified in JIS K2288.

### Pour Point

The pour point of each was determined according to the method detailed in "Test Methods for Determining Pour Point of Crude Oil and Petroleum Products and Methods for Determining Cloud Point of Petroleum Products" as defined in JIS K2269.

### Evaporation Loss

Each candidate oil (50g each) was accurately dispensed into a glass beaker (100mL), the test sample was allowed to stand over 500 hours in an air-circulation type thermostatic chamber maintained at 150°C and then the weight change observed for the sample oil was determined to thus calculate the intended evaporation loss (% by mass).

### Test for Low Temperature Torque Characteristics

They were determined according to the method described in "Methods for Testing Low Temperature Torque Characteristics" as defined in JIS K2220. 18.

### Test for Evaluating Lubricating Life of Bearings

This was determined according to the method specified in ASTM D 3336. The tests were carried out at a temperature of 150°C and the results thus obtained were expressed in terms of the unit (time (hour: h)).

### 5. Results of These Evaluation Tests

The results observed for the grease compositions prepared in Examples 1 to 6 are summarized in the following Tables 4 and 5, while those observed for the grease compositions prepared in Comparative Examples 1 to 13 are summarized in the following Tables 5 to 7:

**Table 1: Formulations of Blend prepared in Examples (unit: % by mass)**

| Ex. No. | 1 | 2 | 3 | 4 | 5 | 6 |
|---|---|---|---|---|---|---|
| Base Oil | | | | | | |
| PET oil | 86.15 | 86.15 | 86.15 | 77.53 | 77.53 | 86.15 |
| Mineral oil | -- | -- | -- | 8.62 | -- | -- |
| PAO | -- | -- | -- | -- | 8.62 | 8.62 |

| Thickening agent | | | | | | |
|---|---|---|---|---|---|---|
| Lithium 12-hydroxy stearate | 11.00 | | | | | |

| Additives | | | | | | |
|---|---|---|---|---|---|---|
| Antioxidant(*1) | 1.80 | | | | | |
| Anticorrosive agent(*2) | 1.00 | | | | | |
| Metal-inactivation agents(*3) | 0.05 | | | | | |

**Table 2: Formulations of Blends prepared in Comparative Examples (unit: % by mass)**

| Comp. Ex. No. | 1 | 2 | 3 | 4 | 5 | 6 |
|---|---|---|---|---|---|---|
| Base Oil | | | | | | |
| PET oil | 86.15 | 86.15 | 86.15 | 86.15 | 86.15 | 86.15 |
| Mineral oil | -- | -- | -- | -- | -- | -- |
| PAO | - | -- | -- | -- | -- | -- |

| Thickening agent | | | | | | |
|---|---|---|---|---|---|---|
| Lithium 12-hydroxy stearate | 11.00 | | | | | |

| Additives | | | | | | |
|---|---|---|---|---|---|---|
| Antioxidant(*1) | 1.80 | | | | | |
| Anticorrosive agent(*2) | 1.00 | | | | | |
| Metal-inactivation agents(*3) | 0.05 | | | | | |

**Table 3: Formulations of Blends prepared in Comparative Examples (unit: % by mass)**

| Comp. Ex. No. | 7 | 8 | 11 | 12 | 18 | |
|---|---|---|---|---|---|---|
| Base Oil | | | | | | |
| PET oil | 86.15 | 77.53 | 86.15 | 86.15 | 86.15 | |
| Mineral oil | -- | 8.62 | -- | -- | -- | |
| PAO | -- | -- | -- | -- | -- | |

| Thickening agent | | | | | | |
|---|---|---|---|---|---|---|
| Li 12-hydroxy stearate | 11.00 | | | | | |

| Additives | | | | | | |
|---|---|---|---|---|---|---|
| Antioxidant(*1) | 1.80 | | | | | |
| Anticorrosive agent(*2) | 1.00 | | | | | |
| Metal-inactivation agent (*3) | 0.05 | | | | | |

| | | | | | | |
|---|---|---|---|---|---|---|
| (*1) Antioxidant: Alkyl diphenylamine; (*2) Anticorrosive agent: Barium di-nonyl naphthalene-sulfonate; (*3) Metal-inactivation agent: Benzotriazole. | | | | | | |

**Table 4: Evaluation Test Results observed in Examples**

| Ex. No. | | 1 | 2 | 3 | 4 | 5 |
|---|---|---|---|---|---|---|
| Base oil (% by mass): | PET | 100 | 100 | 100 | 90 | 90 |
| | Mineral oil | -- | -- | -- | 10 | -- |
| | PAO | -- | -- | -- | -- | 10 |

| Fatty acid composition of PET (% by mass) | | | | | | |
|---|---|---|---|---|---|---|
| Butanoic acid | | -- | -- | -- | -- | -- |
| Caproic acid | | -- | 2 | -- | -- | -- |
| Caprylic acid | | 40 | 38 | 88 | 40 | 40 |
| 2-Ethyl hexanoic acid | | 63 | 53 | 58 | 53 | 58 |
| Capric acid | | 7 | 7 | 7 | 7 | 7 |
| Lauric acid | | -- | - | 2 | - | -- |
| Myristic acid | | **--** | -- | -- | -- | -- |

| Physical Properties of Base Oil | | | | | | |
|---|---|---|---|---|---|---|
| Pour point (°C) | | -52.5 | -55.0 | -50.0 | -50.0 | -55.0 |
| Kinetic viscosity (40°C), mm²/s | | 33.4 | 32.5 | 33.7 | 33.9 | 33.1 |
| Viscosity index | | 116 | 116 | 115 | 114 | 118 |
| Evaporation loss (% by mass) | | 2.8 | 3.0 | 2.6 | 3.9 | 8.6 |

| Evaluation of Base Oil | | | | | | |
|---|---|---|---|---|---|---|
| Low Temp. flow properties | | ○ | ○ | ○ | ○ | ○ |
| Evaporation lose | | ○ | ○ | ○ | ○ | ○ |
| Worked penetration of Grease | | 250 | 247 | 246 | 253 | 255 |

| Low Temp. torque characteristics (at -40°C), mNm | | | | | | |
|---|---|---|---|---|---|---|
| Starting torque | | 210 | 220 | 240 | 250 | 180 |
| Rolling torque | | 58 | 62 | 65 | 65 | 40 |
| Lubricating life of Bearings (150°C), h | | 954 | 855 | 878 | 710 | 750 |

| Evaluation of Grease | | | | | | |
|---|---|---|---|---|---|---|
| Low temperature performance | | ○ | ○ | ○ | ○ | ○ |
| Lubricating life | | ○ | ○ | ○ | ○ | ○ |
| Overall evaluation of grease | | ○ | ○ | ○ | ○ | ○ |

**Table 5: Evaluation Test Results observed in Comparative Examples**

| | | | | | |
|---|---|---|---|---|---|
| Comp. Ex. No. | 6* | 1 | 2 | 3 | 4 |
| Base Oil (PET) (% by mass) | 100 | 100 | 100 | 100 | 100 |

| Fatty acid composition of PET (% by mass) | | | | | |
|---|---|---|---|---|---|
| Butanoic acid | -- | 2 | -- | -- | 2 |
| Caproic acid | 2 | -- | -- | -- | - |
| Caprylic acid | 88 | 88 | 38 | -- | 36 |
| 2-Ethyl hexanoic acid | 52 | 53 | 53 | 100 | 53 |
| Capric acid | 6 | 7 | 7 | -- | 7 |
| lauric acid | 2 | -- | -- | -- | -- |
| Myristic acid | -- | -- | 2 | -- | 2 |

| Physical Properties of Base Oil | | | | | |
|---|---|---|---|---|---|
| Pour point (°C) | -52.5 | -50.0 | -37.5 | -7.5 | -40.0 |
| Kinetic viscosity (40°C), mm²/s | 32.5 | 29.1 | 30.8 | 44.6 | 29.0 |
| Viscosity index | 122 | 116 | 116 | 86 | 118 |
| Evaporation loss (% by mass) | 3.9 | 5.2 | 8.8 | 5.4 | 5.4 |

| Evaluation of Base Oil | | | | | |
|---|---|---|---|---|---|
| Low Temp. flow properties | ○ | ○ | × | × | × |
| Evaporation loss | ○ | × | ○ | × | × |
| Worked penetration of Grease | 249 | 258 | 250 | 249 | 255 |

| Low Temp. torque characteristics (at -40°C), mNm | | | | | |
|---|---|---|---|---|---|
| Starting torque | 260 | 270 | 1300< | 1300< | 1300< |
| Rolling torque | 73 | 70 | -- | -- | -- |
| Lubricating life of Bearings (150°C), h | 810 | 403 | 455 | 394 | 538 |

| Evaluation of Grease | | | | | |
|---|---|---|---|---|---|
| Low temperature performance | ○ | ○ | × | × | × |
| Lubricating life | ○ | × | × | × | × |
| Overall evaluation of grease | ○ | × | × | × | × |

| | | | | | |
|---|---|---|---|---|---|
| *: Example. | | | | | |

**Table 6: Evaluation Test Results observed in Comparative Examples**

| Comp. Ex. No. | | 5 | 6 | 7 | 8 |
|---|---|---|---|---|---|
| Base oil (% by mass): | PET | 100 | 100 | 100 | 90 |
| | Mineral oil | -- | -- | -- | 10 |
| | PAO | -- | -- | -- | -- |

| Fatty acid composition of PET (% by mass) | | | | | |
|---|---|---|---|---|---|
| Butanoic acid | | -- | -- | -- | -- |
| Caproic acid | | -- | -- | -- | -- |
| Caprylic acid | | 25 | 38 | 86 | 86 |
| 2-Ethyl hexanoic acid | | 60 | 24 | 34 | 84 |
| Capric acid | | 25 | 38 | 30 | 30 |
| Lauric acid | | -- | -- | -- | -- |
| Myristic acid | | -- | -- | -- | -- |

| Physical Properties of Base Oil | | | | | |
|---|---|---|---|---|---|
| Pour point (°C) | | -42.5 | -42.5 | -42.5 | -35.0 |
| Kinetic viscosity (40°C), mm²/s | | 29.8 | 30.1 | 32.9 | 33.5 |
| Viscosity index | | 119 | 115 | 123 | 122 |
| Evaporation loss (% by mass) | | 3.9 | 4.0 | 4.1 | 6.1 |

| Evaluation of Base Oil | | | | | |
|---|---|---|---|---|---|
| Low Temp. flow properties | | × | × | × | × |
| Evaporation loss | | ○ | ○ | × | × |
| Worked penetration of Grease | | 251 | 250 | 247 | 256 |

| Low Temp. torque characteristics (at -40°C), mNm | | | | | |
|---|---|---|---|---|---|
| Starting torque | | 1300< | 1100 | 1800< | 1300< |
| Rolling torque | | -- | 660 | -- | -- |
| Lubricating life of Bearings (150°C), h | | 613 | 609 | 835 | 590 |

| Evaluation of Grease | | | | | |
|---|---|---|---|---|---|
| Low temperature performance | | × | × | × | × |
| Lubricating life | | × | × | ○ | × |
| Overall evaluation of grease | | × | × | × | × |

**Table 7: Evaluation Test Results observed in Comparative Examples**

| Comp. Ex. No. | 11 | 12 | 13 |
|---|---|---|---|
| Base Oil (PET) (% by mass) | 100 | 100 | 100 |

| Fatty acid composition of PET (% by mass) | | | |
|---|---|---|---|
| Caproic acid | -- | -- | -- |
| Heptanoic acid | 30 | 50 | 50 |
| Caprylic acid | -- | -- | -- |
| 2-Ethyl hexanoic acid | 35 | -- | 50 |
| Iso-nonanoic acid | 35 | 50 | -- |
| Capric acid | -- | -- | -- |
| Lauric acid | -- | -- | -- |

| Physical Properties of Base Oil | | | |
|---|---|---|---|
| Pour point (°C) | -45.0 | -50.0 | -50.0 |
| Kinetic viscosity (40°C), mm²/s | 35.0 | 35.2 | 30.1 |
| Viscosity index | 115 | 125 | 113 |
| Evaporation loss (% by mass) | 4.2 | 4.8 | 5.1 |

| Evaluation of Base Oil | | | |
|---|---|---|---|
| Low Temp. flow properties | ○ | ○ | ○ |
| Evaporation loss | × | × | × |
| Worked penetration of Grease | 250 | 247 | 256 |

| Low Temp. torque characteristics (at -40°C), mNm | | | |
|---|---|---|---|
| Starting torque | 1000 | 250 | 260 |
| Rolling torque | 600 | 62 | 66 |
| Lubricating life of Bearings (150°C), h | 547 | 508 | 499 |

| Evaluation of Grease | | | |
|---|---|---|---|
| Low temperature performance | × | ○ | ○ |
| Lubricating life | × | × | × |
| Overall evaluation of grease | × | × | × |

| | | | |
|---|---|---|---|
| PET: The pentaerythritol tetra-ester oil according to the present invention. | | | |

### Evaluation Criteria

### Low Temp. flow properties:

○: The sample tested had a pour point of not higher than -45.0°C;
× : The sample tested had a pour point of higher than -45.0°C.

### Evaporation loss :

○: The sample tested showed a weight loss of not more than 4.0% by mass;
× : The sample tested showed a weight loss of higher than 4.0% by mass.

### Low temperature torque characteristics:

Pass: not higher than 500mNm; Failure: higher than 500mNm (for the starting torque);
Pass: not higher than 100mNm; Failure: higher than 100mNm (for the rolling torque).

### Lubricating life of Bearings:

Pass: higher than 700h; Failure: not more than 700h.

### Experimental Results:

The grease compositions prepared in Examples 1 to 6 show good results in the both tests for evaluating the low temperature torque characteristics and for the lubricating life of bearings. Contrary to this, the grease compositions prepared in Comparative Examples 1 to 13 show unacceptable results in either or both of the tests for evaluating the low temperature torque characteristics and for the lubricating life of bearings.

## Claims

1. Use of a grease composition in a bearing wherein:
said grease composition comprises a base oil and a thickening agent,
the base oil comprises a pentaerythritol tetra-ester oil alone or a mixture of the pentaerythritol tetra-ester oil and a synthetic oil other than the tetra-ester oil and/or a mineral oil,
wherein the pentaerythritol tetra-ester oil consists of an ester composed of pentaerythritol and fatty acids, the fatty acids consisting of 38 to 41% by mass of caprylic acid; 6 to 8% by mass of capric acid; and 52 to 54% by mass of 2-ethyl hexanoic acid,
the composition comprises the base oil in an amount of not less than 50% by mass and the thickening agent in an amount ranging from 5 to 30% by mass on the basis of the total mass of the grease composition;
the base oil comprises the pentaerythritol tetra-ester oil in an amount of not less than 70% by mass on the basis of the total mass of the base oil; and
the thickening agent is lithium soap or diurea.

2. The use as set forth in claim 1, wherein the pentaerythritol tetra-ester oil has a kinetic viscosity of not more than 40 mm²/s as determined at 40°C; a viscosity index of not less than 100; and a pour point of not higher than -45°C.

3. The use as set forth in claim 1 or 2, wherein the composition comprises the base oil in an amount ranging from 60 to 90% by mass and the thickening agent in an amount ranging from 6 to 16% by mass on the basis of the total mass of the grease composition.

4. The use as set forth in any one of claims 1 to 3, wherein the consistency of the grease composition ranges from 200 to 350.

5. The use as set forth in any one of claims 1 to 4, wherein the bearing is a rolling bearing.

## Patentansprüche

1. Verwendung einer Schmierfettzusammensetzung in einem Lager, wobei:
die Schmierfettzusammensetzung ein Grundöl und ein Verdickungsmitttel umfasst,
wobei das Grundöl ein Pentaerythritoltetraesteröl allein oder ein Gemisch des Pentaerythritoltetraesteröls und eines synthetischen Öls, welches von dem Tetraesteröl verschieden ist, und/oder eines Mineralöls, umfasst,
wobei das Pentaerythritoltetraesteröl aus einem Ester besteht, der aus Pentaerythritol und Fettsäuren zusammengesetzt ist, wobei die Fettsäuren aus 38 bis 41 Massen-% Caprylsäure, 6 bis 8 Massen-% Caprinsäure und 52 bis 54 Massen-% 2-Ethylhexansäure bestehen,
wobei die Zusammensetzung das Grundöl in einer Menge von nicht weniger als 50 Massen-% und das Verdickungsmittel in einer Menge von 5 bis 30 Massen-%, bezogen auf die Gesamtmasse der Schmierfettzusammensetzung, umfasst,
wobei das Grundöl das Pentaerythritoltetraesteröl in einer Menge von nicht weniger als 70 Massen-%, bezogen auf die Gesamtmasse des Grundöls, umfasst, und
das Verdickungsmittel eine Lithiumseife oder ein Diharnstoff ist.

2. Die Verwendung gemäß Anspruch 1, wobei das Pentaerythritoltetraesteröl eine bei 40°C bestimmte kinetische Viskosität von nicht mehr als 40 mm²/s, einen Viskositätsindex von nicht weniger als 100 und einen Pourpoint von nicht höher als -45°C aufweist.

3. Die Verwendung gemäß Anspruch 1 oder 2, wobei die Zusammensetzung das Grundöl in einer Menge von 60 bis 90 Massen-% und das Verdickungsmittel in einer Menge von 6 bis 16 Massen-%, bezogen auf die Gesamtmasse der Schmierfettzusammensetzung, aufweist.

4. Die Verwendung gemäß einem der Ansprüche 1 bis 3, wobei die Konsistenz der Schmierfettzusammensetzung im Bereich von 200 bis 350 liegt.

5. Die Verwendung gemäß einem der Ansprüche 1 bis 4, wobei das Lager ein Wälzlager ist.

## Revendications

1. Utilisation d'une composition de graisse dans un palier dans laquelle :
ladite composition de graisse comprend une huile de base et un agent épaississant,
l'huile de base comprend une huile de tétra-ester de pentaérythritol seule ou un mélange de l'huile de tétra-ester de pentaérythritol et d'une huile synthétique autre que l'huile de tétra-ester et/ou d'une huile minérale,
dans laquelle l'huile de tétra-ester de pentaérythritol est constituée d'un ester composé de pentaérythritol et d'acides gras, les acides gras étant constitués de 38 à 41 % en masse d'acide caprylique ; de 6 à 8 % en masse d'acide caprique ; et de 52 à 54 % en masse d'acide 2-éthylhexanoïque,
la composition comprend l'huile de base en une quantité non inférieure à 50 % en masse et l'agent épaississant en une quantité située dans la plage de 5 à 30 % en masse sur la base de la masse totale de la composition de graisse ;
l'huile de base comprend l'huile de tétra-ester de pentaérythritol en une quantité non inférieure à 70 % en masse sur la base de la masse totale de l'huile de base ; et
l'agent épaississant est un savon de lithium ou une diurée.

2. Utilisation selon la revendication 1, dans laquelle l'huile de tétra-ester de pentaérythritol a une viscosité cinétique non supérieure à 40 mm²/s telle que déterminée à 40 °C ; un indice de viscosité non inférieur à 100 ; et un point d'écoulement non supérieur à -45 °C.

3. Utilisation selon la revendication 1 ou 2, dans laquelle la composition comprend l'huile de base en une quantité située dans la plage de 60 à 90 % en masse et l'agent épaississant en une quantité située dans la plage de 6 à 16 % en masse sur la base de la masse totale de la composition de graisse.

4. Utilisation selon l'une quelconque des revendications 1 à 3, dans laquelle la consistance de la composition de graisse est située dans la plage de 200 à 350.

5. Utilisation selon l'une quelconque des revendications 1 à 4, dans laquelle le palier est un palier à roulement.
